# DEMANDE DE BREVET EUROPEEN

(11) **EP 1 883 054 A1**
(43) Date de publication de la demande: **30.01.2008**
(21) Numéro de dépôt: 07112727.8
(22) Date de dépôt: 18.07.2007
(51) Int. Cl.: G07F 7/00, G07F 17/10

(54) **Bicyclette, procédé de gestion d'une flotte de bicyclettes et système de gestion d'une telle flotte**

(30) Priorité: 25.07.2006 FR 0606814
(71) Demandeur: JCDecaux SA, 92200 Neuilly-sur-Seine (FR)
(72) Inventeur: Le Gars, Jacques, 78950 Gambais (FR); Paris, Jacques, 78370 Plaisir (FR); Tavernier Patrick, 78410 Bouafle (FR)
(74) Mandataire: Cabinet Plasseraud

(57) **Abrégé**

Bicyclette comprenant un dispositif de détection de choc et une unité centrale de contrôle (19) reliée audit dispositif de détection de choc.

## Description

L'invention concerne une bicyclette, un procédé de gestion d'une flotte de bicyclettes et un système de gestion d'une telle flotte.

Aujourd'hui, certaines villes sont équipées de systèmes automatisés de location de bicyclettes permettant à chacun d'emprunter une bicyclette pour effectuer un parcours.

De tels systèmes comportent une pluralité de bornes fixes à chacune desquelles peut être accrochée au moins une bicyclette, ces bornes étant reliées à un automate muni d'une interface utilisateur permettant à un usager de commander, contre communication d'informations spécifiques, telles que ses coordonnées bancaires ou un code utilisateur prédéterminé, le déverrouillage d'une bicyclette.

Une bicyclette pour un tel système, comprenant une unité centrale de contrôle, est décrite notamment dans les documents WO-A-02/09 5698 et WO-A-01/54080.

Lorsque l'utilisateur prend soin de la bicyclette empruntée, celle-ci nécessite peu de maintenance. Dans le cas contraire, et en particulier dans le cas où l'utilisateur monte sur un trottoir sans se soucier de ne pas occasionner de choc sur les roues, en particulier sur la roue arrière, la maintenance de la bicyclette peut être très importante.

En effet, ce type de mauvaise utilisation de la bicyclette entraîne une augmentation importante des crevaisons et des cas de roues voilées. En pratique, les deux tiers des crevaisons et l'essentiel des roues voilées affectent les roues arrières plus soumises aux chocs en cas de montée brutale sur un obstacle, tel qu'un trottoir par exemple.

Il serait donc très utile de détecter des mauvaises utilisations des bicyclettes, par exemple pour informer l'utilisateur ou encore pour informer le gestionnaire de la flotte de bicyclettes (celui-ci peut alors, par exemple, déclencher une opération de maintenance préventive ou encore "sanctionner" l'utilisateur à l'origine d'une mauvaise utilisation).

A cet effet, la bicyclette selon l'invention comprend un dispositif de détection de choc relié à l'unité centrale de contrôle.

Ainsi, on peut détecter les chocs subis par la bicyclette, ces chocs étant symptomatiques d'une mauvaise utilisation susceptible d'endommager la bicyclette.

Dans divers modes de réalisation de la bicyclette selon l'invention, on peut éventuellement avoir recours en outre à l'une et/ou à l'autre des dispositions suivantes :
- la bicyclette est adaptée pour être verrouillée sur un poste de verrouillage fixe qui communique avec au moins un dispositif de gestion de bicyclettes, ladite unité centrale de contrôle étant adaptée pour communiquer avec un des postes de verrouillage ;
- l'unité centrale de contrôle est adaptée pour communiquer avec un dispositif de gestion de bicyclettes ;
- l'unité centrale de contrôle est adaptée pour signaler une détection de choc au dispositif de gestion de bicyclettes ;
- l'unité centrale de contrôle est adaptée pour mémoriser un paramètre fonction du nombre de chocs détectés par le dispositif de détection de choc et/ou de l'intensité desdits chocs ;
- l'unité centrale de contrôle est adaptée pour transmettre le nombre de chocs à un dispositif de gestion de bicyclettes ;
- une interface adaptée pour communiquer des informations à un utilisateur peut être prévue et l'unité centrale de contrôle est adaptée pour communiquer audit utilisateur les informations liées aux détections de chocs passées ;
- la bicyclette comprend un cadre, une roue avant et une roue arrière, et le dispositif de détection de choc est fixé au cadre au voisinage de la roue arrière ;
- le dispositif de détection de choc comprend un accéléromètre ;
- le dispositif de détection de choc est adapté pour détecter un choc lorsqu'il mesure une accélération supérieure à une valeur prédéterminée ;
- l'unité centrale de contrôle est adaptée pour déterminer qu'un choc a eu lieu lorsque le dispositif de détection de choc mesure une accélération supérieure à une valeur prédéterminée.

L'invention concerne aussi un procédé de gestion d'une flotte de bicyclettes comprenant au moins une bicyclette telle que précitée, ledit procédé comprenant les étapes suivantes :
- emprunt d'une bicyclette, et
- détection d'un choc sur la bicyclette empruntée.

Le procédé de l'invention peut aussi comporter l'une et/ou l'autre des étapes suivantes :
- Transmission à un système de gestion d'une flotte de bicyclettes, d'un paramètre indicatif d'un choc ;
- détermination d'un montant de transaction en fonction d'au moins un paramètre indicatif des détections de chocs en cours d'utilisation d'emprunt ;
- détermination d'une tarification à appliquer à l'utilisateur en fonction des détections de chocs passées ;
- déclenchement sélectif d'une opération de maintenance en fonction des détections de chocs passées.

L'invention concerne aussi un système de gestion d'une flotte de bicyclettes comprenant au moins une bicyclette telle que précitée et au moins un dispositif de gestion apte à mettre en oeuvre le procédé de gestion précité.

Ce système peut en outre comprendre au moins un poste de verrouillage fixe qui communique avec au moins un dispositif de gestion de bicyclettes et qui est adapté pour communiquer avec une bicyclette de la flotte lorsque ladite bicyclette est verrouillée sur ledit poste de verrouillage.

L'invention sera bien comprise et ses avantages apparaîtront mieux à la lecture de la description détaillée qui suit, des modes de réalisation donnés à titre d'exemples non limitatifs.

La description se réfère aux dessins annexés sur lesquels :
- la figure 1 représente une vue en perspective illustrant schématiquement un système de gestion d'une flotte de bicyclettes,
- la figure 2 est un diagramme illustrant schématiquement l'organisation interne du système de la figure 1,
- la figure 3 est un diagramme illustrant un procédé de gestion d'une flotte de bicyclettes selon l'invention.

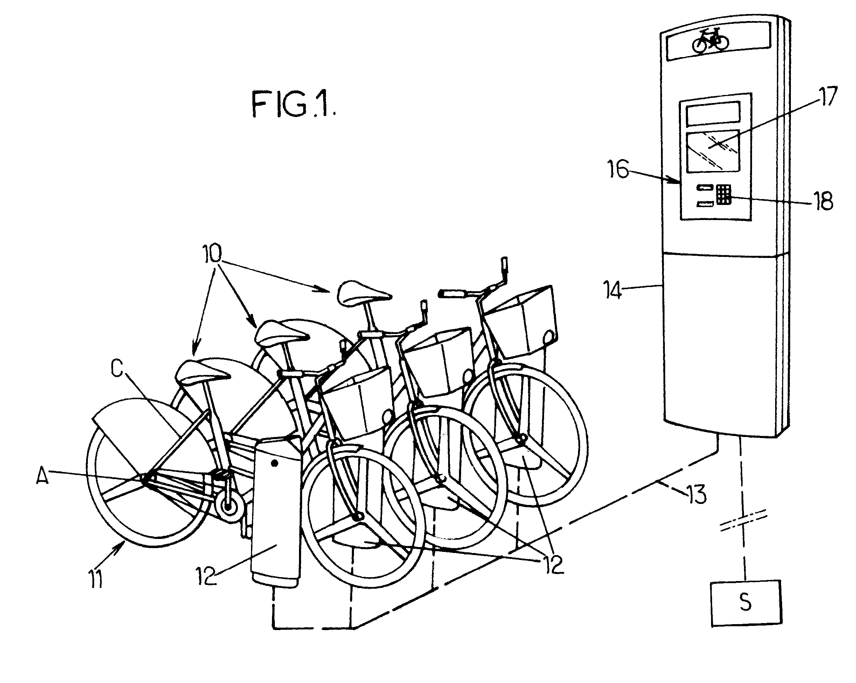

Sur la figure 1 est représenté un système de gestion d'une flotte de bicyclettes 10 proposées à la location, notamment en milieu urbain.

Les bicyclettes 10 sont ici représentées dans une position remisée où chacune d'entre elles est fixée temporairement à un poste de verrouillage tel qu'une borne de stockage 12, laquelle est munie d'un système de verrouillage (non représenté) qui coopère avec des moyens d'accrochage (non représentés) prévus sur la bicyclette 10 pour empêcher son utilisation par une personne non autorisée.

Les bornes de stockage 12 peuvent être regroupées en une ou plusieurs stations de stockage de bicyclettes, une seule station étant représentée sur la figure 1.

Les bornes de stockage 12 d'une même station sont raccordées, par exemple par un câble enterré 13 (représenté en traits interrompus), à une borne interactive 14 accessible aux usagers.

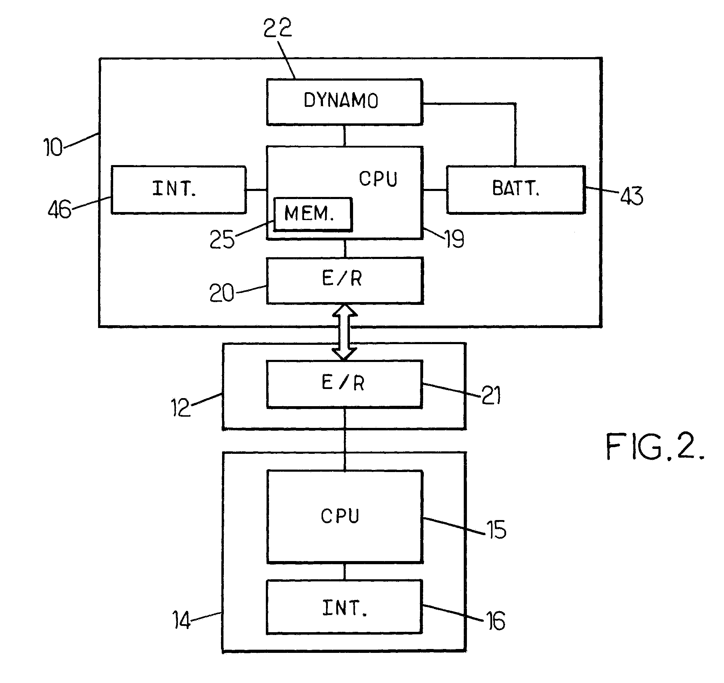

En référence à la figure 2, cette borne interactive 14 comporte une unité centrale de contrôle (CPU) 15, ainsi qu'une interface utilisateur 16 reliée à la CPU 15. La borne interactive 14 comprend de préférence un écran 17 et un clavier 18. Comme cela est représenté sur la figure 1, la borne interactive 14 de chaque station peut communiquer à distance avec un dispositif (ou serveur) de gestion S de la flotte de bicyclettes.

Chaque bicyclette 10 est également équipée d'une unité centrale de contrôle (CPU) 19 et d'un émetteur/récepteur 20 relié à la CPU 19.

Chaque borne de stockage 12 est, quant à elle, équipée d'un émetteur/récepteur 21, les émetteurs/récepteurs 20, 21 formant conjointement une interface de communication entre la CPU 15 de la borne interactive 14 et la CPU 19 de la bicyclette 10.

A la demande d'un utilisateur, le système de verrouillage d'une borne de stockage 12 donnée peut être désactivé sous la commande de la borne interactive 14 pour permettre à l'utilisateur de disposer de la bicyclette 10 correspondante. Ce déverrouillage peut, par exemple, être effectué sur autorisation du serveur de gestion S (représenté schématiquement sur la figure 1), après que l'utilisateur s'est identifié sur la borne interactive 14. Cette identification est, par exemple, effectuée au moyen d'une carte électronique, d'un code ou tout autre moyen équivalent.

La CPU 19 de la bicyclette 10 peut, par exemple, recevoir de la borne interactive 14, au moment de l'autorisation de location, un identifiant spécifique associé à l'utilisateur.

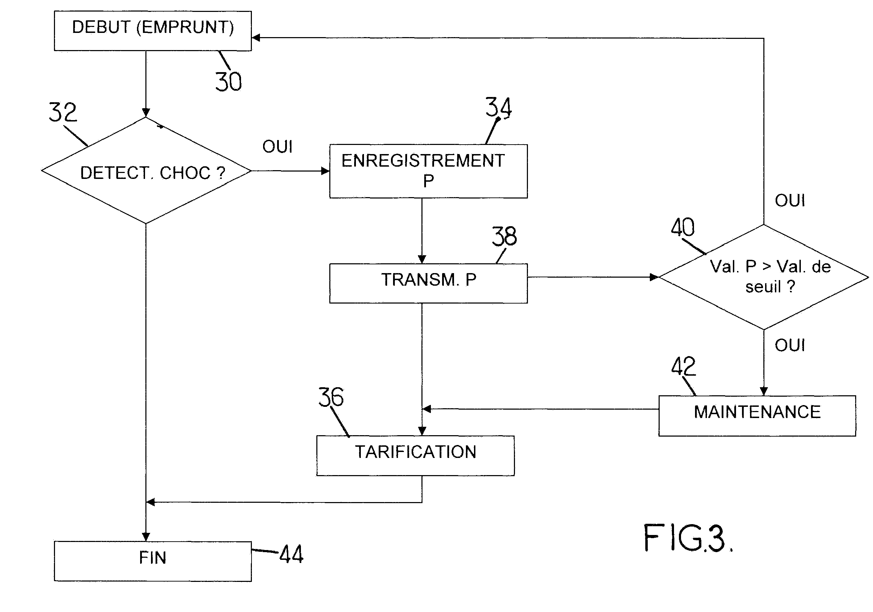

En référence à la figure 3, afin d'alimenter électriquement la bicyclette 10, cette dernière comprend en outre une dynamo 22, montée sur l'une des roues de la bicyclette 10, et raccordée électriquement à la CPU 19, ainsi qu'une batterie d'accumulateurs 23, raccordée électriquement à la fois à la dynamo 22 et à la CPU 19.

La CPU 19 de la bicyclette 10 comporte, en outre, une mémoire interne 25 de type flash dans laquelle, comme nous le verrons par la suite, peuvent être stockées une ou plusieurs valeurs.

La CPU 19 est programmée pour détecter un choc sur la roue arrière 11 de la bicyclette 10 empruntée. Cette détection peut être effectuée au moyen d'un dispositif de détection de choc, en l'espèce un accéléromètre A, dont est équipé le cadre C de la bicyclette 10 au voisinage de la roue arrière 11. Cet accéléromètre est relié électriquement à la CPU 19.

Ce dispositif de détection de choc A peut être adapté pour détecter un choc lorsqu'il mesure une accélération supérieure à une valeur prédéterminée. En variante, ce peut être la CPU 19 qui peut être adaptée pour déterminer qu'un choc a eu lieu lorsque le dispositif de détection de choc A mesure une accélération supérieure à une valeur prédéterminée.

Nous allons à présent décrire un procédé de gestion de la flotte, en référence à la figure 3.

Le procédé de gestion de la flotte selon l'invention, comporte une première étape 30 d'emprunt de la bicyclette 10. Cette étape 30 se traduit concrètement par le déverrouillage de la borne de stockage 12 correspondante sous la commande de la CPU 15 de la borne interactive 14.

Si la bicyclette subit ensuite un choc assez violent en cours d'utilisation, ce choc est ensuite détecté par le dispositif de détection de choc A, au cours de l'étape 32 de détection de choc.

Dès lors qu'un choc est détecté sur la bicyclette 10 empruntée, l'utilisateur de la bicyclette peut être averti (par exemple dans un but dissuasif) par transmission d'informations par l'intermédiaire d'une interface 46 prévue à cet effet sur la bicyclette 10, et permettant par exemple une activation sonore ou un affichage, en particulier sur un écran.

La CPU 19 de la bicyclette peut être adaptée pour mémoriser à l'aide de la mémoire 25, au cours d'une étape 34 d'enregistrement, un paramètre P représentant le nombre de chocs détectés par le dispositif de détection de choc A et/ou l'intensité de chacun de ces chocs.

La détection de choc peut aussi déclencher une étape de transmission 38, au cours de laquelle la CPU 19 de la bicyclette transmet les paramètres P représentatifs des chocs passés (ou tout autre paramètre dépendant de ces paramètres P), directement au serveur de gestion S et/ou par l'intermédiaire d'un poste de verrouillage.

Dans ce dernier cas, la transmission d'un paramètre P est préférentiellement faite par l'intermédiaire de la borne de stockage 12 et de la borne interactive 14, juste avant la fin de la transaction, lorsque l'utilisateur ramène la bicyclette à une borne de stockage 12 (étape de remisage).

Dans le cas d'une transmission directe au serveur de gestion S, l'étape 38 peut éventuellement avoir lieu tout au long de l'emprunt dans le cas où la bicyclette serait en communication permanente avec ledit serveur, au moyen d'une interface de communication radio à relativement longue portée (non représentée).

En fonction des paramètres P correspondant aux chocs passés, on peut en outre, au cours d'une étape 36, déterminer un montant de transaction qui dépend du nombre et/ou de l'intensité des chocs encaissés pendant l'emprunt de la bicyclette 10.

Cette étape 36 de tarification est préférentiellement réalisée à la fin de l'emprunt dès que le ou les paramètres P sont transmis au serveur de gestion S (étape 38) après remisage de la bicyclette.

A la fin de la transaction (étape 44), l'utilisateur peut être informé du montant de la transaction, par exemple par l'intermédiaire de l'interface utilisateur 16 de la borne interactive 14. On comprend que l'utilisateur peut aussi être informé directement sur la bicyclette empruntée 10 par l'intermédiaire de l'interface utilisateur 46 prévue sur la bicyclette 10, par exemple en fonction d'informations reçues depuis le serveur de gestion S.

L'interface utilisateur 46 peut également, en fin de transaction, communiquer des informations à l'utilisateur, par exemple le nombre de chocs enregistrés au cours de l'emprunt et/ou leur intensité.

Par ailleurs, dès que les paramètres P sont transmis au serveur de gestion S, ils sont comparés à une valeur de seuil au-delà de laquelle une étape 42 de maintenance est activée. L'étape 42 de maintenance peut, par exemple, comporter un changement de la roue lorsque cette dernière est voilée et/ou un changement de pneu lorsque celui-ci est crevé.

L'étape 40 de comparaison du paramètre indicatif P avec la valeur de seuil peut aussi permettre de changer le client de catégorie en le passant dans une catégorie de mauvais utilisateur et ainsi appliquer une tarification plus élevée. Le client peut alors être informé qu'il est passé dans cette nouvelle catégorie et de ce changement tarifaire.

Eventuellement, l'utilisateur peut également être averti que, sans modification de son comportement, son abonnement peut être suspendu pendant une durée donnée, etc. Cette information lui est, en outre, préférentiellement transmise lors de l'emprunt suivant.

## Revendications

1. Bicyclette comprenant une unité centrale de contrôle (19), **caractérisée en ce qu'**elle comprend en outre un dispositif de détection de choc (A) relié à ladite unité centrale de contrôle (19) et **en ce que** ladite unité centrale de contrôle (19) est adaptée pour communiquer avec un dispositif de gestion de bicyclettes (S).

2. Bicyclette selon la revendication précédente, adaptée pour être verrouillée sur un poste de verrouillage fixe (12) qui communique avec au moins un dispositif de gestion de bicyclettes (S), ladite unité centrale de contrôle (19) étant adaptée pour communiquer avec ledit poste de verrouillage (12).

3. Bicyclette selon la revendication 2, dans laquelle l'unité centrale de contrôle (19) est adaptée pour signaler une détection de choc au dispositif de gestion de bicyclettes (S).

4. Bicyclette selon l'une quelconque des revendications précédentes, dans laquelle l'unité centrale de contrôle (19) est adaptée pour mémoriser un paramètre (P) fonction du nombre de chocs détectés par le dispositif de détection de choc (A) et/ou de l'intensité desdits chocs.

5. Bicyclette selon la revendication précédente, dans laquelle l'unité centrale de contrôle (19) est adaptée pour transmettre ledit paramètre (P) à un dispositif de gestion de bicyclettes (S).

6. Bicyclette selon l'une quelconque des revendications précédentes, comprenant en outre une interface (46) adaptée pour communiquer des informations à un utilisateur et dans laquelle l'unité centrale de contrôle (19) est adaptée pour communiquer audit utilisateur, par ladite interface (46), des informations liées aux détections de chocs passées.

7. Bicyclette selon l'une quelconque des revendications précédentes, comprenant un cadre (C), une roue avant et une roue arrière (11), dans laquelle le dispositif de détection de choc (A) est fixé au cadre (C) au voisinage de la roue arrière (11).

8. Bicyclette selon la revendication précédente, dans laquelle le dispositif de détection de choc (A) comprend un accéléromètre (A).

9. Bicyclette selon la revendication précédente, dans laquelle le dispositif de détection de choc (A) est adapté pour détecter un choc lorsqu'il mesure une accélération supérieure à une valeur prédéterminée.

10. Bicyclette selon la revendication 8, dans laquelle l'unité centrale de contrôle (19) est adaptée pour déterminer qu'un choc a eu lieu lorsque le dispositif de détection de choc (A) mesure une accélération supérieure à une valeur prédéterminée.

11. Procédé de gestion d'une flotte de bicyclettes comprenant au moins une bicyclette selon l'une quelconque des revendications précédentes, ledit procédé comprenant les étapes suivantes :
- emprunt d'une bicyclette (30), et
- détection d'un choc sur la bicyclette empruntée (32).

12. Procédé de gestion selon la revendication précédente, comprenant en outre une étape de transmission (38) à un système de gestion d'une flotte de bicyclettes, d'un paramètre (P) indicatif d'un choc.

13. Procédé de gestion selon la revendication 11 ou 12, comprenant en outre une étape de détermination d'un montant de transaction (36) en fonction d'au moins un paramètre (P) indicatif des détections de chocs en cours d'utilisation.

14. Procédé de gestion selon l'une quelconque des revendications 11 à 13, comprenant en outre une étape (36) au cours de laquelle on détermine une tarification à appliquer à l'utilisateur en fonction des détections de chocs passées.

15. Procédé de gestion selon l'une quelconque des revendications 11 à 14, comprenant en outre une étape (42) au cours de laquelle on déclenche sélectivement une opération de maintenance en fonction des détections de chocs passées.

16. Système de gestion d'une flotte de bicyclettes comprenant au moins une bicyclette selon l'une quelconque des revendications 1 à 10 et au moins un dispositif de gestion apte à mettre en oeuvre le procédé de gestion selon l'une quelconque des revendications 11 à 15.

17. Système de gestion selon la revendication précédente, comprenant en outre au moins un poste de verrouillage fixe (12) qui communique avec au moins un dispositif de gestion de bicyclettes (S) et qui est adapté pour communiquer avec une bicyclette (10) de la flotte lorsque ladite bicyclette (10) est verrouillée sur ledit poste de verrouillage (12).
